# EUROPÄISCHE PATENTSCHRIFT

(11) **EP 2 427 323 B1**
(45) Veröffentlichungstag und Bekanntmachung des Hinweises auf die Patenterteilung: **19.02.2014**
(21) Anmeldenummer: 10719324.5
(22) Anmeldetag: 04.05.2010
(51) Int. Cl.: B29C 70/20, B29C 70/34

(54) **VERFAHREN ZU HERSTELLUNG EINES FASERVERBUNDMATERIALS**
METHOD FOR THE PRODUCTION OF A FIBER COMPOSITE
PROCÉDÉ DE FABRICATION D'UN MATÉRIAU COMPOSITE RENFORCÉ PAR FIBRES

(30) Priorität: 04.05.2009 DE 102009019500; 29.07.2009 DE 102009061031
(43) Veröffentlichungstag der Anmeldung: 14.03.2012
(73) Patentinhaber: Knappe, Faisal H.-J., 97475 Zeil (DE)
(72) Erfinder: Knappe, Faisal H.-J., 97475 Zeil (DE)
(74) Vertreter: Bauer, Dirk
(86) Internationale Anmeldenummer: PCT/EP2010/056040
(87) Internationale Veröffentlichungsnummer: WO 2010/128049

(56) Entgegenhaltungen:
- EP-A1- 0 308 237
- US-A- 5 198 281
- US-A1- 2004 144 478
- Jared Nelson: "Aluminium frame build incorporates carbon fiber tubes" 1. Januar 2006 (2006-01-01), XP002610151 Gefunden im Internet: URL:http://cozybeehive.blogspot.com/2007_1 2_01_arhive.html [gefunden am 2010-11-17]

## Beschreibung

Die Erfindung betrifft ein Verfahren zur Herstellung eines Faserverbundmaterials enthaltend Fasern und ein diese verbindendes Harz.

Faserverbundmaterialien, auch als Faserverbundwerkstoffe bezeichnet, sind Mehrphasen- oder Mischmaterialien, die aus einer bettenden Matrix aus einem Harz sowie verstärkenden Fasern bestehen. Durch gegenseitige Wechselwirkungen der beiden Komponenten besitzt ein Faserverbundmaterial höherwertige Eigenschaften als die Fasern sowie das Harz jeweils einzeln für sich betrachtet. Insbesondere bei Verwendung extrem dünner Fasern mit einem Durchmesser von nur einigen Mikrometern wirkt sich der so genannte Effekt der spezifischen Festigkeit positiv auf das Faserverbundmaterial aus. Als Ursache für diesen Effekt ist die mit sinkendem Durchmesser zunehmende Gleichrichtung der Molekülketten der Fasern in der abnehmenden zur Verfügung stehenden Querschnittsfläche anzusehen. Auch führt die Vielzahl extrem dünner Fasern zu einer Verteilung der möglicherweise zum Bruch führenden Fehlstellen im Material auf sehr große Abstände. Ein Materialfehler in einer Faser führt auf diese Weise nicht zum Versagen des gesamten aus dem Material hergestellten Bauteils, sondern zunächst meist nur zum Bruch einer einzelnen Faser in dem Verbund. Aus diesem Grunde zeichnen sich Faserverbundmaterialien durch sehr hochwertige Eigenschaften aus, die durch ein möglichst optimal abgestimmtes Zusammenspiel beider Komponenten erzielt werden. Insbesondere besitzen Faserverbundmaterialien ein sehr gutes Verhältnis aus Festigkeit und Masse (Gewicht).

Als Fasern kommen für Faserverbundmaterialien typischerweise Glasfasern, Kohlenstofffasern (Karbonfasern), Keramikfasern (Aluminiumoxid, Siliziumdioxid u.a.), Aramidfasern, metallische Fasern (insbesondere Stahlfasern) und Naturfasern (aus Flachs, Hanf, Jute, Sisal o.ä.) in Frage. Die aus Harz bestehende Matrix der bekannten Faserverbundmaterialien wird häufig von Duromeren (Synonym: Duroplast, Kunstharz), Elastomeren oder Thermoplasten gebildet. Eine typische Erscheinungsform von Faserverbundmaterialien sind die so genannten Laminate, bei denen die Vorteile einer individuellen Faserausrichtung genutzt werden. Laminate enthalten häufig eine Mehrzahl von übereinander gelegten Fasermatten mit unterschiedlichen Hauptfaserrichtungen. Zur Laminatherstellung werden meist Verfahren wie das Handlegeverfahren, das Handauflegen mit Vakuumpressen, die Prepreg-Technologie, die Vakuum-Infusion, das Faserwickeln sowie das Faserspritzen verwendet, wobei es sich bei letzteren streng genommen mangels exakter Schichten nicht um ein Laminierverfahren handelt, wobei das Ergebnis jedoch vergleichbare Eigenschaften wie die klassischen Laminate besitzt.

Neben Laminaten werden Faserverbundmaterialien häufig auch in Form von Spritzgussteilen, Spritzpressteilen oder Strangziehteilen verwirklicht, wobei die unidirektionale Orientierung der Fasern je nach Verfahren unterschiedlich erfolgreich praktiziert werden kann.

Schließlich sind noch Faserverbundwerkstoffe als so genannte "Sheet Molding Compounds" (SMC) bekannt, bei denen Harzmatten aus Harzen (mit Zusätzen wie Härter, eventuelle Füllstoffe oder Additive) und Glasfaserstücken vorgefertigt werden und nach einer Reifezeit, in der sich die Viskosität deutlich erhöht, weiter verarbeitet werden, wobei typischerweise in beheizten Werkzeugen nach einer Rückverflüssigung ein Pressen und Aushärten erfolgt.

Häufiger Nachteil bei Faserverbundmaterialien ist die nicht vollständige Einbettung der Fasern in die Harzmatrix. Dies ist typischerweise beim nachträglichen Tränken von aus Fasern zuvor geschaffenen Verbundstrukturen (Geweben, Gelegen, Gewirken, Gestricken, Vliesen, etc.) der Fall und gilt insbesondere bei einer zuvor stattgefundenen Verarbeitung der Faser-Einzelfilamente zu Fäden unter Anwendung einer Verdrehung bzw. Verzwirnung der Einzelfilamente. Die Zwischenräume zwischen den Einzelfilamenten sind insbesondere unter Berücksichtigung der Viskosität des Harzes kaum vollständig zu erreichen bzw. auszufüllen, so dass die Festigkeit der erhaltenen Werkstoffe unter dem theoretisch möglichen Maß deutlich zurückbleibt. Darüber hinaus ist der Anteil des Harzes an der Masse bzw. dem Volumen des gesamten Faserverbundmaterials im Stand der Technik unter Kosten- sowie unter energetischen und Umweltgesichtspunkten zu hoch.

US-A-5837372 offenbart ein Verfahren, wobei Multifilamentfäden mit einem in einem Lösemittel aufgelöstes Harz impregniert und getrocknet wird. Nachher wird das verfestigte Harz durch Führung der Fäden über Rollen aufgebrochen. Die Fäden werden zu einem Gewebe weiterverarbeitet.

### Aufgabe

Der Erfindung liegt die Aufgabe zugrunde, ein Verfahren zu Herstellung eines Faserverbundmaterials zu schaffen, das sich durch eine hohe Festigkeit bei gleichzeitig minimiertem Harzeinsatz auszeichnet.

### Lösung

Ausgehend von einem Faserverbundmaterial der eingangs genannten Art wird die vorgenannte Aufgabe dadurch gelöst, dass das Material Fäden enthält, die eine Mehrzahl von Einzelfilamenten und das durch Einwirkung mindestens einer physikalischen Größe und/oder mindestens eines chemischen Stoffs vernetzbare Harz enthalten, wobei das Harz in einem unvernetzten Zustand, jedoch im Wesentlichen frei von Lösungsmitteln vorliegt und die Mehrzahl der Einzelfilamente in dem Faden zusammenhält, wobei die Einzelfilamente in den Fäden unidirektional zueinander angeordnet sind und wobei die Fäden dadurch ein Verbundmaterial bilden, dass sie an Kontaktflächen jeweils ihrer äußeren Mantelflächen über Brücken aus Harz aneinander haften.

Bei dem vorstehend beschriebenen Faserverbundmaterial handelt es sich um ein Halbfabrikat, da das Harz im unvernetzten Zustand vorliegt, in dem es lediglich einen geringen Teil seiner Endfestigkeit bzw. -härte besitzt und in diesem Zwischenzustand des Verbundmaterials lediglich dazu dient, um das aus den Fäden gebildete Verbundmaterial zusammenzuhalten und überhaupt handhabbar zu machen. Das Faserverbundmaterial zeichnet sich somit durch eine sehr gute Verformbarkeit und Flexibilität aus, so dass es vor der Vernetzung noch umgeformt, d.h. in die endgültige Form gebracht werden kann, bevor anschließend die eigentliche Vernetzung, d.h. Aushärtung, des Harzes stattfindet, um aus dem Halbfabrikat ein Fertigprodukt (das selbstverständlich noch weiteren Bearbeitungsschritten unterworfen werden kann) herzustellen.

Eine wichtige Komponente wird von den bei der Verbundmaterialherstellung verwendeten monofilen Fäden gebildet, die aus einer Mehrzahl von Einzelfilamenten und dem diese umgebenden Harz bestehen. Die unidirektional ausgerichteten Einzelfilamente in den solchermaßen aufgebauten Fäden sind vorzugsweise vollständig von dem Harz eingebettet, wobei sich in den Fäden keinerlei Lufteinschlüsse mehr befinden sollen. Die Einzelfilamente sind zwar durch das Harz zu einem monofil handhabbaren Faden zusammengefügt, sind jedoch in ihrer Position relativ zueinander innerhalb des Fadens verschiebar. Dies ist insbesondere dann wichtig, wenn benachbarte Fäden des aus den Fäden gebildeten Verbundmaterials sich an ihren Kontaktstellen im Querschnitt abflachen können und dadurch größere Kontaktflächen bilden, als dies bei Fäden der Fall ist, die aus verdrehten bzw. verzwirnten Einzelfilamenten bestehen. Die Größe der Kontaktflächen bestimmt wesentlich die spätere Festigkeit des Faserverbundmaterials nach der Harzaushärtung.

Weiteres wesentliches Charakteristikum des Materials ist der Umstand, dass beim Zusammenfügen der Fäden zur Bildung des Verbundmaterials kein zusätzliches Harz verwendet werden muss. Es entfällt somit der Vorgang des Tränkens, Tauchens, Besprühens, Eingießens o.ä. einer aus Fasern gebildeten Stützstruktur, wie dies bei konventionellen Herstellungsverfahren der Fall ist. Somit ist der Harzanteil bei dem Faserverbundmaterial sehr gering, da das Harz sehr gezielt, nämlich lediglich an den Fäden bzw. deren Einzelfilamenten anhaftend eingesetzt wird. Gleichwohl kann trotz dieses geringen erforderlichen Harzeinsatzes, der das Material sehr umweltfreundlich, leicht, aber auch kostengünstig herstellbar macht, der Harzanteil - falls dies gewünscht ist - durch zusätzliche von den Fäden unabhängige Harzzugabe erhöht werden, um beispielsweise die ansonsten verbleibenden Freiräume zwischen den Fäden auszufüllen. An dieser Stelle sei betont, dass auch unabhängig von einer solchen, für das Material eher untypischen Auffüllung, ein sehr guter Zusammenhalt der Fäden gewährleistet ist, da an sämtlichen Berührungsstellen der Fäden eine gute Anhaftung im Sinne eines Zusammenklebens über die "Harzbrücken" gewährleistet ist, da die eingesetzten Fäden auch an ihrer äußeren Mantelfläche vollständig von einer Harzschicht umgeben sind.

Die Wesentlichen Vorteile des durch die Erfindung geschaffenen Faserverbundmaterials sind somit die großen Kontaktflächen an den Berührungspunkten der Fäden aufgrund deren Fähigkeit, sich auch nach Herstellung des Zwischenfabrikats "Faserverbundmaterial mit unvernetztem Harz" noch zu verformen (unter Beibehaltung des Sub-Verbundes "Faden"), wobei sich typischerweise der Querschnitt des Fadens von kreisförmig zu abgeflacht, theoretisch bis hin zu rechteckförmig, verformen lässt. Anstelle linienförmiger Kontaktbereiche bei geometrisch exakt runden Fäden und paralleler Ausrichtung benachbarter Fäden, werden bei dem Material rechteckförmige Kontaktstreifen gebildet, deren Fläche entsprechend größer ist, wodurch sich ein besserer Zusammenhalt, d.h. eine höhere Festigkeit des Endprodukts im vernetzten Zustand, ergibt. Verlaufen benachbarte Fäden unter einem Winkel zueinander, insbesondere im Fall, wo sich diese unter einem Winkel von 90° kreuzen, so liegt anstelle eines einzigen Kontaktpunktes bei geometrisch exakt zylinderförmigen Fäden im Falle der rechteckförmig abgeflachten Fäden eine Kontaktfläche mit quadratischer Gestalt vor. Auch in diesem Fall tritt eine wesentliche Vergrößerung der Kontaktfläche und damit Erhöhung der Festigkeit ein. Der mögliche Verzicht auf eine separate Harzzugabe zusätzlich zu den verwendeten Fäden macht die Verarbeitung derselben, d.h. die Herstellung des Faserverbundmaterials nach der Erfindung besonders einfach und sauber.

Wesentlich für die Erfindung ist ferner auch das Vorliegen des Faserverbundmaterials in unvernetztem Zustand, um nach der Herstellung noch viele Freiheitsgrade für die spätere Verwendung offen zu halten und erst den späteren Verwender entscheiden zu lassen, welche konkrete geometrische Form das Faserverbundmaterial annehmen soll. Das Harz wird erst dann vernetzt, wenn das Material in die gewünschte Form gebracht wurde, beispielsweise durch Biegen, Pressen, Walzen, Wickeln, Tiefziehen, Strecken, Laminieren usw.

Um den Zusammenhalt des als Zwischenprodukt dienenden Faserverbundmaterials zu erhöhen und somit die Handhabbarkeit zu vereinfachen und die Gefahr eines ungewollten Auflösens des Verbundes vor der Aushärtung des Harzes zu reduzieren, können aneinander haftende Fäden gegeneinander gepresst sein, wobei vorzugsweise das Faserverbundmaterial als solches gepresst ist. Dabei sollte der aufgewendete Pressdruck moderat sein und lediglich dem Zweck dienen, die Fäden an ihren Oberflächen über Brücken des unvernetzten Harzes aneinander zu koppeln. Der eigentliche Aushärtevorgang des Harzes (und bedarfsweise ein weiterer Pressvorgang) folgt dann typischerweise an einem anderen Ort zu einem späteren Zeitpunkt, nachdem das Faserverbundmaterial mit dem ungehärteten Harz durch weitere Bearbeitung, insbesondere Umformung, in seine endgültige Form gebracht wurde.

Die Erfindung weiter ausgestaltend ist vorgesehen, dass das Faserverbundmaterial ein Gewirk, ein Gestrick, ein Gelege, ein Vlies oder ein Gewebe, vorzugsweise in Leinwandbindung, ist, das Kett- und/oder Schussfäden in Form von Fäden enthält, die einen monofilen Verbund aus einer Mehrzahl von Einzelfilamenten und dem unvernetzten Harz bilden, wobei die Einzelfilamente sämtlichen der vorgenannten Fäden unidirektional zueinander ausgerichtet sind. Aufgrund der großen Kontaktflächen zwischen den Fäden lässt sich auf diese Weise ein Material mit sehr guten Festigkeitseigenschaften erreichen.

Ferner wird vorgeschlagen, dass das Faserverbundmaterial ein Sandwich-Material aus mindestens einer Schicht aus einem Gewebe, vorzugsweise in Leinwandbindung, und mindestens einer Schicht aus einem Vlies ist wobei das Gewebe solche Fäden enthält, vorzugsweise jeweils ausschließlich daraus besteht, die aus einer Mehrzahl von Einzelfilamenten und dem unvernetzten Harz bestehen, und das Vlies mit einem unvernetzten Harz versehen, insbesondere darin getränkt oder damit besprüht ist, und die Schichten über aus Harz bestehende Brücken zwischen benachbarten Fäden benachbarter Schichten miteinander zu dem Faserverbundmaterial verbunden sind.

Die zugrunde liegende Aufgabe wird darüber hinaus auch von einem Faserverbundmaterial gelöst, das Fäden enthält, die eine Mehrzahl von Einzelfilamenten und das in einem vernetzten Zustand vorliegende und die Einzelfilamente miteinander verbindende Harz enthalten, wobei die Einzelfilamente unidirektional zueinander angeordnet sind und die Fäden dadurch einen Verbund bilden, dass sie an Kontaktflächen jeweils ihrer äußeren Mantelflächen über Brücken des vernetzten Harzes miteinander verbunden sind.

Bei dem vorstehend beschriebenen Material handelt es sich im Vergleich mit dem weiter oben genannten gleichfalls erfindungsgemäßen Faserverbundmaterial insofern um ein "Fertigprodukt" als das Harz vernetzt wurde, d.h. im ausgehärteten Zustand vorliegt. Insofern hat das Verbundmaterial seine Endhärte erreicht und kann im Vergleich mit dem oben beschriebenen Material auf Basis des noch unvernetzten Harzes deutlich weniger vorsichtig gehandhabt werden. Durch die Vernetzung des Harzes ist die Festigkeit hoch und die Flexibilität gegenüber dem unvernetzten Zustand des Harzes deutlich reduziert, weshalb spätere Formänderungen des Materials nur noch innerhalb sehr enger Grenzen möglich sind. Das erfindungsgemäße Faserverbundmaterial mit vernetztem Harz eignet sich daher insbesondere für standardmäßige Produkte wie Platten oder Profile unterschiedlichster Querschnitte, Rohre etc., die mit normierten Abmessungen hergestellt und wie standardmäßige Halbfabrikate gehandelt und gelagert werden. Auch eine Verwendung als Stützgewebe oder -gelege oder andere Arten textiler Flächengebilde oder auch Netze ist möglich. Die Vorteile im Hinblick auf die Festigkeit sowie das Herstellungsverfahren gelten in gleicher Weise wie auch zu dem Verbundmaterial mit unvernetztem Harz weiter oben ausgeführt wurde.

Eine besonders hohe Festigkeit des Faserverbundmaterials liegt vor, wenn die Querschnitte der Fäden zumindest im Bereich von deren Kontaktflächen ovalförmig, ellipsenförmig oder abgerundet rechteckförmig sind, wobei die Kontaktflächen sich im Querschnitt an den abgeflachten Seiten des Ovals oder der Ellipse oder den langen Seiten des Rechtecks befinden. Durch die Kontaktflächenvergrößerung wird eine Verbesserung des Zusammenhalts durch die vom ausgehärteten Harz verursachen Klebkräfte bewirkt.

Auch im Fall des vernetzten Harzes kann das erfindungsgemäße Faserverbundmaterial ein Sandwich-Material sein vorzugsweise bestehend aus mindestens einer Schicht aus einem Gewebe, Gelege, Gewirk o.ä. und mindestens einer Schicht aus einem Vlies, wobei das Gewebe, Gelege oder Gewirk die erfindungsgemäßen Fäden aus Einzelfilamenten in unidirektionaler Ausrichtung mit einem einbettenden Harz enthalten. Das vorgenannten Sandwich-Material kann durch Pressen zu einem Formteil oder einem Profil, insbesondere einem mit einem I-, L-, T-, U-, V-, H- oder Y-Profil umgeformt sein und während des Pressens oder anschließend, insbesondere durch Hitzeeinwirkung, vernetzt sein.

Die erfindungsgemäße Lösung besteht darüber hinaus in einem Verfahren zur Herstellung eines Faserverbundmaterials gemäß Anspruch 1.

Das erfindungsgemäße Verfahren greift somit auf spezielle monofile Fäden zurück, deren Einzelfilamente aufgrund des noch unvernetzten Harzes relativ zueinander verschiebbar sind, so dass sich die Querschnittsform der Fäden unter Einwirkung äußerer Kräfte noch ändern lässt.

Aufgrund des Vorhandenseins einer ausreichenden Menge von unvernetztem Harz in den monofilen Fäden an deren gesamter äußerer Mantelfläche, lassen sich diese durch unterschiedlichste Verbindungs- bzw. Kopplungsarten zu einem Verbund Vlies (textiles Flächengebilde = Gewebe, Gelege, Gewirk, Gestrick, Vlies etc.), ohne dass zur Erreichung eines zuverlässigen Zusammenhalts zusätzliches Harz eingesetzt werden müsste. Das unvernetzte Harz liegt aus Gründen einer Lagerbarkeit und Weiterverwendbarkeit der Fäden in einem Zustand vor, in dem es im Wesentlichen kein Lösungsmittel mehr enthält. Gleichwohl besitzt es eine "Rest-Klebrigkeit", die es ermöglicht, mit Harz ummantelte Fäden durch ein Miteinander-in-Kontakt-Bringen so zu koppeln, dass der solchermaßen gebildete Verbund handhabbar ist, d.h. lagerbar (wickelbar, stapelbar, verpackbar usw.) ist, ohne dass das Harz zuvor bereits in den vernetzten Zustand überführt werden müsste.

Bis schließlich die Vernetzung des Harzes bewirkt wird, lässt sich die Gestalt bzw. Form des erfindungsgemäß hergestellten Faserverbundmaterials noch ändern, was eine vielseitige Verwendbarkeit des Materials bedeutet.

Um die Festigkeit des erhaltenen Materials zu vergrößern, können die benachbarten und über jeweils eine Brücke aus Harz miteinander verbundenen Fäden im Bereich einer Kontaktfläche miteinander verpresst werden. Die Ausübung eines Drucks bewirkt somit eine Veränderung der Form des Fadenquerschnitts im Sinne einer Abflachung und damit einer Vergrößerung der miteinander in Kontakt stehenden Flächen.

Die Bildung des Verbundes aus den Fäden mit unvernetztem Harz erfolgt nach dem erfindungsgemäßen Verfahren somit unabhängig von der Vernetzung des Harzes und somit der Erzielung der Endfestigkeit des Faserverbundmaterials.

Sinnvollerweise erfolgen das Verpressen der Fäden in dem zuvor gebildeten Verbund und das Vernetzen, insbesondere durch Einwirkung von Temperatur, - zumindest teilweise - gleichzeitig. Das Herstellungsverfahren ist auf diese Weise besonders rationell.

Schließlich wird noch vorgeschlagen, dass ein rohrförmiges Hohlprofil mit rundem ovalem, elliptischen oder eckigem Querschnitt aus den Fäden einschließlich des deren Einzelfilamente einbettenden, unvernetzten Harzes hergestellt wird und das Hohlprofil anschließend durch in Längsrichtung fortlaufendes Einschnüren in eine Richtung senkrecht zu einer Längsachse des Hohlprofils zu einem Profil mit reduzierter Querschnittsfläche umgeformt wird, vorzugsweise unter Anwendung von Pressdruck senkrecht zu der Längsachse des Hohlprofils, und dass das Harz während der Umformung oder im Anschluss daran, insbesondere durch Hitzeeinwirkung, vernetzt wird.

Auf diese Weise lassen sich auf sehr elegante Weise aus zuvor hergestellten Hohlkörpern Profile mit unterschiedlichsten Querschnittsformen herstellen, wobei durch eine Art von "Zusammenfalten" qualitativ hochwertige Eck- bzw. Kantenausbildungen möglich sind.

Die Erfindung wird nachfolgend anhand mehrerer Ausführungsbeispiele von Faserverbundmaterialien, die in der Zeichnung dargestellt sind, näher erläutert.

Es zeigt:
- Fig. 1:: einen Querschnitt durch einen Faden, enthaltend eine Vielzahl von Einzelfilamenten, mit einer Innenzone und einer Außenzone,
- Fig. 2:: drei exemplarisch herausgegriffene Einzelfilamente aus dem Fadenquerschnitt gemäß Fig. 1,
- Fig. 3:: ein Faserverbundmaterial in Form eines Leinwandgewebes,
- Fig. 4a und Fig. 4b:: jeweils eine vergrößerte Darstellung zweier abgeflachter Fäden im Bereich von deren Kontaktfläche,
- Fig. 5:: einen Schnitt durch ein Faserverbundmaterial in Form eines SandwichMaterials aus 19 Einzelschichten,
- Fig. 6:: eine schematische Darstellung des Umformvorgangs von einem kreisförmigen Hohlprofil zu einem L-Profil und
- Fig. 7:: eine Draufsicht auf das Faserverbundmaterial gemäß Fig. 5.

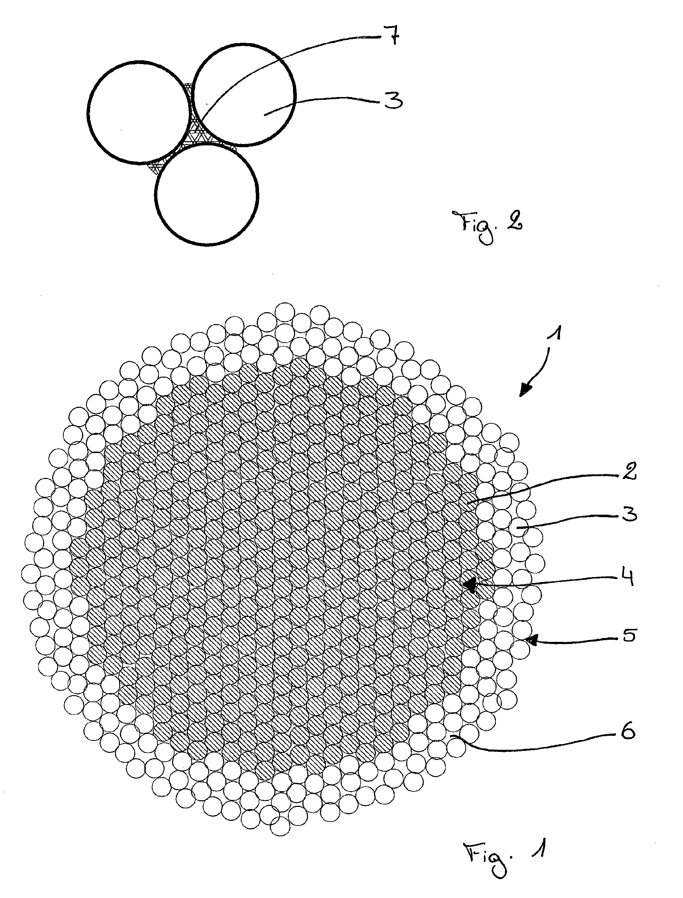

Ein in Fig. 1 im Querschnitt dargestellter Faden 1 enthält eine Vielzahl von Einzelfilamenten 2, 3, bei denen es sich jeweils um "endlose" Monofilamente handelt. Die Einzelfilamente 2 eines ersten Typs, die sich in einer ungefähr kreisförmigen Innenzone 4 des Querschnitts des Fadens 1 befinden, bestehen z.B. aus Para-Aramid. Hingegen bestehen die Einzelfilamente 3 eines zweiten Typs, die in einer ringförmigen Außenzone 5 um die Innenzone 4 herum angeordnet sind und eine Art "Mantel" um die von der Innenzone 4 gebildete "Seele" darstellen, aus Glasfasern. Als Einzelfilamente eignen sich für das erfindungsgemäße Faserverbundmaterial sämtlich bekannte Fasern, insbesondere die, die bereits oben in dieser Anmeldung genannt sind. Selbstverständlich kann auch nur eine einzige Art von Einzelfilamenten in einem Faden angeordnet sein. Sämtliche Zwischenräume 6 zwischen benachbarten Fäden sind mit einem unvernetzten Harz, im vorliegenden Fall einem Silikonharz der Firma Wacker des Typs ... ausgefüllt. Im gesamten Querschnitt des Fadens befinden sich keine Luftzwischenräume, sondern alle Einzelfilamente 2 und 3 sind vollständig in das Material des Harzes eingebettet. Darüber hinaus sind auch die äußeren Mantelflächen der eine äußere Lage bildenden Einzelfilamente 3 der Außenzone 5 an ihren nach außen gewandten Seiten mit einer dünnen Harzschicht überzogen, die der Einfachheit halber in Fig. 1 nicht dargestellt ist.

Fig. 2 zeigt drei exemplarisch aus dem Einzelfilament-Verbund herausgegriffene Einzelfilamente 3 (hier aus Glasfaser). Ein Zwickelbereich 7 zwischen den drei benachbarten Einzelfilamenten 3 ist vollständig mit dem Harz ausgefüllt und sorgt für einen sicheren und stabilen Zusammenhalt der drei Einzelfilamente. Wie zuvor ausgeführt, gilt die Ausfüllung mit Harz auch für sämtliche anderen Zwickelbereiche zu den nicht weiter dargestellten benachbarten Einzelfilamenten 3 bzw. auch 2 im Grenzbereich zwischen der Innenzone 4 und der Außenzone 5.

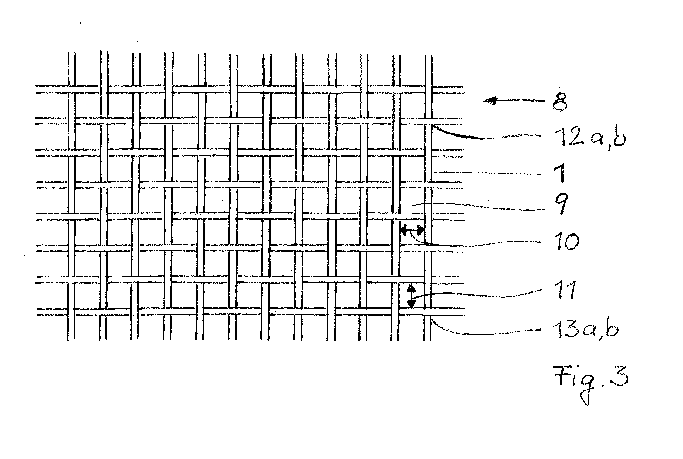

Fig. 3 zeigt in einer Draufsicht ein erstes Ausführungsbeispiel eines Faserverbundmaterials 8 in Form eines Gewebes in Leinwandbindung. Die einzelnen Fäden 1 besitzen beispielsweise einen Aufbau gemäß den Fig. 1 und 2, können aber auch abweichend gestaltet sein. Von Bedeutung ist im vorliegenden Fall, dass das Harz, das die Einzelfilamente 2, 3 der Fäden 1 zusammenhält, in einem unvernetzten Zustand vorliegt, so dass zwar der Zusammenhalt der als monofil zu betrachtenden Fäden 1 gewährleistet ist, jedoch eine relative Verschiebbarkeit der Einzelfilamente 2, 3 zueinander noch möglich ist, solange das Harz nicht ausgehärtet, d.h. nicht vernetzt, ist.

Die Einzelfilamente 2, 3 der Fäden 1 sind jeweils sämtlich undirektional ausgerichtet, d.h. verlaufen parallel zueinander und parallel zu einer Längsachse des Fadens 1. Diese Ausrichtung der Einzelfilamente 2, 3 muss sowohl beim Aufwickeln der Fäden 1 nach ihrer Herstellung, aber auch während des gesamten sich später anschließenden Herstellungsprozesses des Leinwandgewebes des Faserverbundmaterials 8 (Webvorgang) beibehalten werden. Aus diesem Grunde verbietet sich insbesondere auch das bei der Gewebeherstellung ansonsten übliche sogenannte "Über-Kopf-Abziehen" der Fäden von den Spulen. Wichtig ist somit, dass die Einzelfilamente 2, 3 der Fäden 1 auch in dem Leinwandgewebe gemäß Fig. 3 sämtlich noch unidirektional zueinander angeordnet sind.

Das Gewebe des Faserverbundmaterials 8 gem. Fig. 3 besitzt eine sehr geringe Kett- und Schussfadendichte, so dass eine Art Gitterstruktur gebildet ist. Von jeweils zwei benachbarten Kettfäden und gleichfalls zwei benachbarten Schussfäden begrenzte Maschen 9 sind offen, d.h. insbesondere nicht mit Harz ausgefüllt. Die Maschen 9 besitzen typischerweise eine in horizontale Richtung gemessene Weite 10 von ca. 5 mm bis 10 mm und eine in vertikale Richtung gemessene Weite 11 von gleichfalls ca. 5 mm bis 10 mm, so dass Maschen 9 mit einem quadratischen Querschnitt vorliegen.

Nach der webtechnischen Herstellung des Faserverbundmaterials 8 aus den Fäden 1 mit unvernetztem Harz, kann das Faserverbundmaterial nur leicht verpresst werden, ohne dass dabei höhere Temperaturen (insbesondere nicht über 100° C) zur Anwendung kommen. Hierdurch wird lediglich der Verbund im Bereich der Kontaktflächen sich kreuzender Fäden 1 verbessert, um die Integrität des Gewebes (im unvernetzten Zustand des Harzes) erhalten zu können, ohne die Handhabungsvorgänge mit extremer Vorsicht durchführen zu müssen. Durch den moderaten Druck senkrecht zu der durch das Gewebe gebildeten Ebene werden die Fäden nur leicht in jeder Querschnittsform verändert, d.h. abgeflacht, so dass die Kontaktflächen 12a im Bereich sich kreuzender Fäden 1 vergleichsweise klein sind, jedenfalls ist die Breite einer streifenförmigen Kontaktfläche 12a wesentlicher kleiner als der Durchmesser des Fadens 1. Im Bereich der Kontaktfläche 12a ist eine Brücke 13a aus dem unvernetzten Harz ausgebildet, die die sich kreuzenden Fäden 1, d.h. insbesondere die in den Fäden 1 vorhandenen Einzelfilamente 3 der jeweiligen Außenzonen 5 miteinander verbindet.

Nachdem das Gewebe des Faserverbundmaterials 8 im unvernetzten Zustand des Harzes in aufgewickelter Form aufbewahrt und transportiert wurde, kann es unter Anwendung von Druck (z.B. 150-300 N/cm²) und Temperatur (oberhalb von ca. 140° C) in den Endzustand überführt werden, indem das Harz vernetzt wird und dadurch aushärtet.

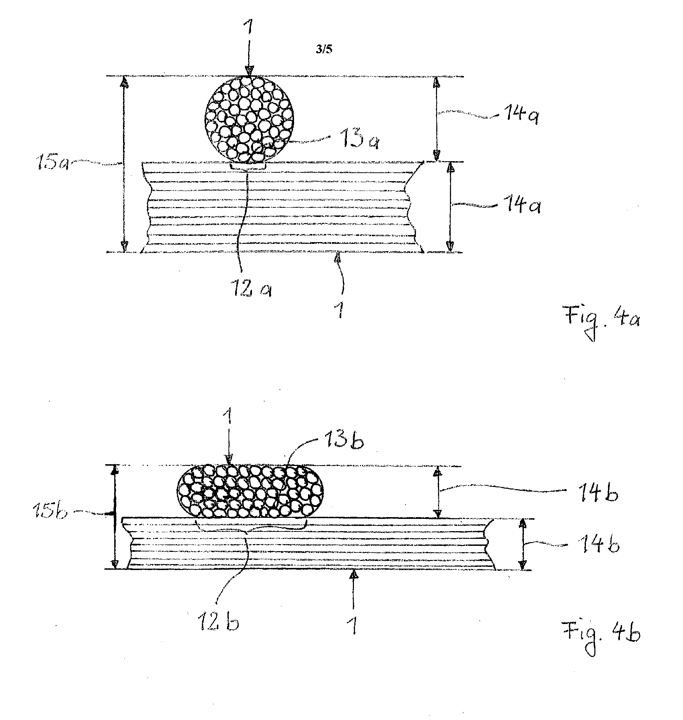

Wie sich insbesondere der Fig. 4b entnehmen lässt, ändern die Fäden 1 durch Aufbringung des vorstehend genannten erhöhten Drucks ihre Querschnittsform deutlich, indem sie nunmehr stark abgeflacht sind und eine Ovalform besitzen, theoretisch sogar bis hin zu einer nur leicht abgerundeten Rechteckform verformt werden können. Eine Höhe 14b der Fäden 1, 2 ist gegenüber der Höhe 14a gemäß Fig. 4a deutlich reduziert. Die ungefähre Dicke 15a des Gewebes im nur leicht vorgepressten Zustand kann durch die Verformung der Fäden 1 gleichfalls deutlich auf die nach der Vernetzung vorliegende Dicke15b gemäß Fig. 4b reduziert werden. In der Praxis beträgt die reduzierte Dicke 15b des Gewebes ungefähr 20 % bis 70 % der ursprünglichen Dicke nach dem Webvorgang, die nahezu dem zweifachen Durchmesser eines einzelnen Fadens 1 entspricht. Aus Fig. 4b lässt sich ferner noch entnehmen, dass die Kontaktfläche 12b nach Aufbringung des Pressdrucks und damit einhergehender Abflachung, d.h. Verbreitung der Fäden 1, deutlich angewachsen ist, wodurch die sich dann ausbildende Harzbrücke 13b wesentlich größer ist, als im Fall des nur leichten Pressdrucks gemäß Fig. 4a. Die vergrößerte Kontaktfläche 12b bzw. die vergrößerte Brücke 13b bewirkt eine starke Verfestigung des Faserverbundmaterials 8 nach dem Pressvorgang und der Vernetzung des Harzes.

Nach dem Pressvorgang und der Harzvernetzung kann das Gewebe mit einer Klebstoffschicht und einem Trägermaterial (z.B. Papier oder Folie) mit einseitiger Silikonbeschichtung versehen werden, um anschließend das solchermaßen gebildete Sandwich-Material in Bahnen zu schneiden und als Klebeband (einseitig oder doppelseitig klebend) zu verwenden.

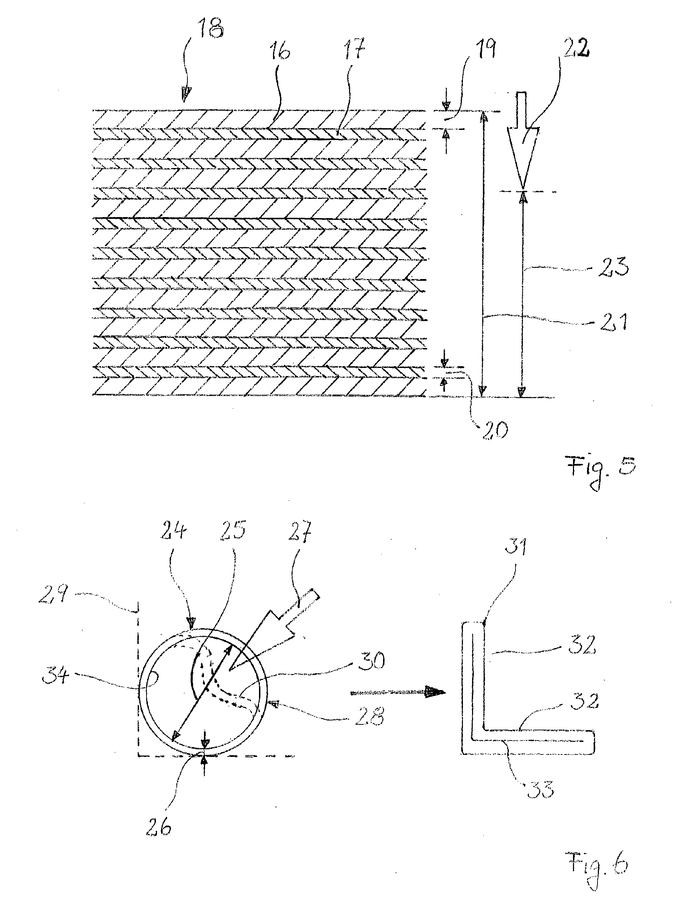

Bei dem Faserverbundmaterial 18 gemäß Fig. 5 handelt es sich um ein Sandwich-Material, das aus einer Mehrzahl von Schichten 16, bestehend jeweils aus einem Gewebe, und einer Mehrzahl von Schichten 17, jeweils bestehend aus einem Vlies, zusammengesetzt ist. Im vorliegenden Fall besteht das Faserverbundmaterial 18 aus zehn Schichten 16 des Gewebes, das beispielsweise analog zu dem in Fig. 3 dargestellten Faserverbundmaterial 8 ausgeführt sein kann. Andere Arten von Geweben, die jeweils aus Fäden 1 bestehend aus einer Mehrzahl von Einzelfilamenten und diese einbettendem unvernetzten Harz bestehen, jedoch andere Bindungsarten aufweisen, sind gleichfalls möglich.

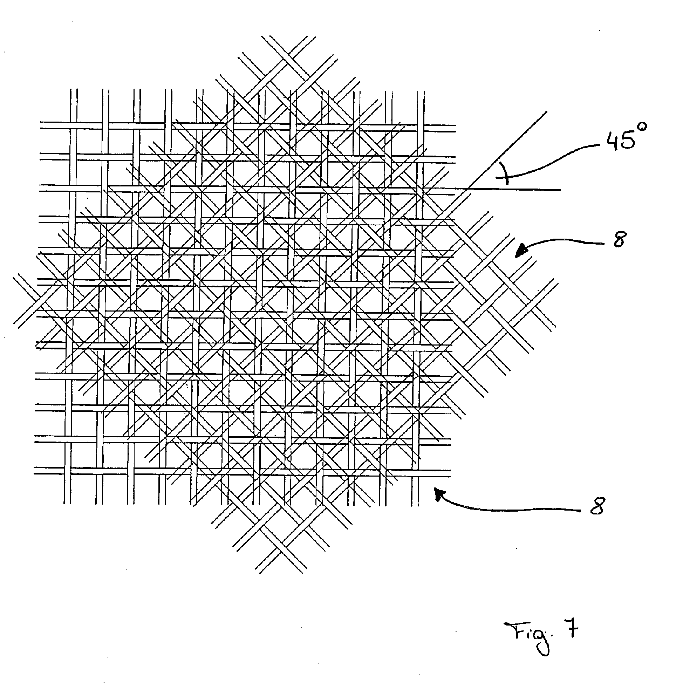

Die Schichten 16 aus Gewebe und 17 aus Vlies sind jeweils abwechselnd übereinander angeordnet (gestapelt), wobei die obere und untere Schicht 16 jeweils von einem Gewebe gebildet wird, um die Abriebfestigkeit des Faserverbundmaterials 18 an dessen Oberflächen zu steigern. Die Schichten 16 aus dem Gewebe sind - wie in Fig. 7 veranschaulicht ist - abwechselnd um 45° (innerhalb der Gewebeebene) zueinander verdreht angeordnet, um auch in Diagonalenrichtung einer Schicht 16 über die um 45° verdrehte benachbarte Schicht 16 eine hohe Zugfestigkeit zu erzielen. Über die zusätzlichen Verbindungspunkte zwischen den Fäden zueinander verdrehte Faden - unter Zwischenschaltung einer Vliesschicht - wird die Festigkeit und Dimensionsstabilität des Materials deutlich erhöht und eine Anwendbarkeit von FEM - Berechnungsmethoden weiter begünstigt.

Die das Vlies enthaltende Schicht 17 umfasst ein Aramid- Vlies mit einem Flächengewicht von ca. 25 g/m² und 40 g pro m². Um eine sichere Verbindung mit den Schichten 16 aus dem Gewebe sowohl im unvernetzten Zustand als auch später im vernetzten Zustand des Harzes zu erzielen, werden die Schichten 17 aus dem Vlies mit vorzugsweise demselben Harz versehen, das auch zur Einbettung der Einzelfilamente in den Fäden 1 des Gewebes der Schichten 16 dient. Das Harz kann durch Tränken des Vlieses der Schichten 17 in einem Harzbad oder durch Besprühen des Vlieses mit dem Harz erfolgen. Dabei ist es sinnvoll, das trockene Vlies auf das Gewebe, z.B. gemäß Fig. 3 im trockenen Zustand aufzulegen, um den im Zuge der Tränkung mit Harz auftretenden starken Festigkeitsverlust zu kompensieren und im weiteren Lauf der Sandwich-Material-Herstellung das stabilisierende Gewebe und das getränkte Vlies als Pärchen handzuhaben. Von derartigen Pärchen können neun übereinander angeordnet werden, wobei zum Abschluss, beispielsweise auf der Oberseite eine weitere Schicht 16 aus Gewebe aufgebracht wird. Trotz eines evtl. gewissen Harzüberschusses in den mit Harz getränkten bzw. besprühten Vliesen der Schichten 17 sind die Maschen 9 in dem Gewebe der Schichten 16 nicht vollständig ausgefüllt.

Die im Zuge des Tränkens oder Besprühens mit Harz aus dem Vliesverbund zunächst gelockerten und frei beweglichen Aramid-Faserstücke, dienen als mechanische Verbindung der Einzelfilamente der Fäden 1 untereinander sowie mit den benachbarten Vlieslagen.

Insbesondere zur Erhöhung der mechanischen Festigkeit in diverse Richtungen werden die Schichten 16 des Gewebes abwechselnd um 45° in Bezug auf die Längsrichtung beispielsweise einer Fadengruppe (Kettenfäden) verdreht angeordnet.

Während die Dicke 19 einer einzelnen Schicht 16 aus Gewebe zwischen ca. 0,35 mm und 1,5 mm beträgt, ist die Dicke 20 einer Schicht 17 aus Vlies mit ca. 0,15 mm und 0,25 mm wesentlich geringer als die vorgenannte Gewebedicke. Die 19 in Fig. 5 dargestellten Einzelschichten des Faserverbundmaterials 18 weisen im ungepressten Zustand eine Dicke 21 von ca. 0,45 mm bis 1,7 mm auf.

Vor dem Erhitzen zwecks Vernetzung des Harzes wird das Faserverbundmaterial 18, beispielsweise mit Hilfe einer Plattenpresse zusammengepresst und zwar in Richtung des Pfeils 22, wodurch sich eine Reduzierung der nach dem Press- und Aushärtvorgang vorliegenden Dicke 23 ergibt.

Die Figur 6 zeigt in schematischer Darstellung, wie der Herstellungsprozess eines weiteren alternativen Ausführungsbeispiels eines Faserverbundmaterials 28 in Form eines im Querschnitt L-förmigen Profils von statten gehen kann. Ausgangspunkt für das schließlich L-förmige Profil, wie es in Figur 6 in der rechten Bildhälfte dargestellt ist, ist ein in der linken Bildhälfte in durchgezogenen Linien gezeichnetes, im Querschnitt kreisringförmiges Profil 24. Letzteres wird unter Verwendung eines Dorns, dessen Außendurchmesser einem Innendurchmesser 25 des Profilquerschnitts entspricht, hergestellt, indem die Fäden 1 auf einer äußeren Mantelfläche des Dorns in Form einer z.B. Kreuzwicklung aufgebracht werden. Die hierzu verwendeten Fäden 1 enthalten wiederum eine Vielzahl von Einzelfilamenten (alle desselben Typs oder verschiedene Typen von Einzelfilamenten in gemischter oder räumlich getrennter Anordnung) und ein die Fäden umschließendes unvernetztes Harz, wodurch der Faden monofile Eigenschaften aufweist. Wichtig bei dem Wickelvorgang ist wiederum, dass dadurch keine Drehung in den Faden eingebracht wird, d.h. auch in der gewickelten Form besitzen sämtliche Einzelfilamente sämtlicher Fäden eine unidirektionale Ausrichtung. Ein Zusammenhaften der einzelnen Fäden in dem Wickelverbund wird durch Wahl der geeigneten Wickelspannung gewährleistet, wodurch es zu einer hinreichend festen Anlage sich kreuzender Fäden im Bereich von deren Kontaktflächen kommt (vgl. Darstellung der sich kreuzenden Fäden gemäß Figur 4a). Die Kontaktflächen, an denen Brücken unvernetzten Harzes ausgebildet sind, sind jedoch noch vergleichsweise klein, so dass der in Rohrform vorliegende Wickelverbund zwar einen für eine Handhabung ausreichenden Zusammenhalt, jedoch noch keine Festigkeit besitzt, die für eine Verwendung als Fertigwerkstoff erforderlich wäre.

Eine Wandstärke 26 des gewickelten Rohres beträgt ca. zwischen 0,45 mm und 2,4 mm. In Abhängigkeit von dem Durchmesser der verwendeten Fäden sind zur Erzielung einer solchen Wandstärke ungefähr zwischen 2 und 60 Fadenlagen erforderlich. Wichtig ist auch in diesem Fall, dass bei der Herstellung des Wickelverbundes - entgegen der klassischen Vorgehensweise der Faserverbundwerkstoff-Herstellung - kein zusätzliches Harz verwendet wird, mit dem die zwischen den einzelnen Fäden verbleibenden Lücken geschlossen würden.

In Analogie zu dem Sandwich-Material gemäß Figur 5 können auch beim Wickeln zwischen benachbarten Fadenlagen Schichten aus einem harzgetränkten Vlies aus unterschiedlichen Fasern angeordnet werden, um ein dichteres Material mit einer größeren Oberfläche zu erzeugen und hierdurch z.B. die Dämpfungs- und Isoliereigenschaften zu verbessern.

Nach Abschluss des Wickel- und eventuell zwischengeschalteten Laminiervorgangs (Zwischenschichten aus Vlies) kann das Halbfabrikat in Form des rohrförmigen Profils 24 von dem Stützdorn abgezogen werden. Da das Harz in diesem Moment unvernetzt ist, besitzt das Profil 24 eine vergleichsweise große Flexibilität und Verformbarkeit, so dass es unter Einwirkung äußerer Kräfte in seiner Gestalt innerhalb weiter Grenzen verändert werden kann. So kann beispielsweise in Richtung des Pfeils 27 mittels eines geeigneten Werkzeugs, z.B. einer Mehrzahl von Pressrollen, zwecks mehrstufiger Formveränderung, ein Pressdurck auf das Profil 24 ausgeübt werden, wobei dieses wiederum durch ein geeignetes Werkzeug, das rein schematisch durch die unter einem 90°-Winkel verlaufende gestrichelte Linie 29 veranschaulicht sein soll, entgegen der in Pfeilrichtung wirkenden Kraft abgestützt bzw. gelagert wird. So kann das Profil 24 in einem Zwischenstadium die im Querschnitt eingedellte Form gemäß der gestrichelten Linien 30 in der linken Bildhälfte der Figur 6 aufweisen.

Nach eventuell mehrstufiger Umformung liegt im Ergebnis das L-Profil 31 vor, das in Figur 6 rechts abgebildet ist. Es handelt sich in diesem Fall um ein gleichschenkliges L-Profil, dessen beide L-Schenkel in der Mitte eine Kontaktfläche 33 besitzen, an der Abschnitte der ehemaligen inneren Mantelfläche 34 des Profils 24 in Folge des Pressvorgangs aneinander stoßen. Im fertigen Profil 31 ist diese innere Kontaktfläche 33 nicht sichtbar. Sie ist auch im Hinblick auf die Material- und Festigkeitseigenschaften nicht von Relevanz, da aufgrund des hohen Pressdrucks auch im Bereich dieser Kontaktflächen 33 eine Abflachung miteinander in Berührung kommender Fäden stattfindet, so dass die Kontaktflächen zwischen den Fäden und die von dem Harz gebildeten Brücken entsprechend groß sind, woraus im Ergebnis ein von den Eigenschaften her über den gesamten Profilquerschnitt sehr homogenes Bauteil entsteht. Die Länge solchermaßen hergestellter Profile kann bis zu ca. 10 m oder sogar mehr betragen.

Grundsätzlich lässt sich in Bezug auf die erfindungsgemäßen Faserverbundmaterialien 8, 18, 28 und das Verfahren zu deren Herstellung festhalten, dass die Materialeigenschaften wesentlich durch die Höhe des Pressdrucks, der nach Herstellung eines Fadenverbundes, der noch unter Verwendung des Harzes im unvernetzten Zustands aufgebracht wird, beeinflusst werden. Mit steigendem Pressdruck nimmt die Abflachung der Fäden und damit die Größe der Kontaktflächen und auch der Harzbrücken zu, wodurch eine höhere Festigkeit und Dichte des Materials, aber auch eine abnehmende Elastizität erzielt wird. Hingegen lassen sich bei vergleichsweise geringem Pressdruck Materialien mit auch im ausgehärteten Harzzustand größerer Elastizität und auch größerer Porosität, d.h. Oberfläche, herstellen, was insbesondere für Dämm- und Absorptionseigenschaften wichtig ist. Auch das spezifische Gewicht des erfindungsgemäßen Faserverbundmaterials lässt sich durch Wahl des geeigneten Pressdrucks innerhalb vergleichsweise großer Grenzen variieren.

Ein weiterer Aspekt der Erfindung besteht in der Verwendung einer Pulpe, beispielsweise einer Aramidpulpe, um eine Füllung bzw. Verkleinerung der Freiräume der Maschen 9 eines Gewebes mit Gitterstruktur gemäß Figur 3 erzielen zu können, ohne hierbei ein Vlies zu verwenden. So kann ein vergleichsweise offenes Gewebe wie in Figur 3 dargestellt beispielsweise unter einem Winkel zwischen 15° und 45° zu einem der Fadensysteme durch ein Bad gezogen werden, das aus einer Mischung aus Wasser, Harz und der hochfibrillierten Pulpe (Oberfläche ca. 13m² pro Gramm Fasern) besteht. Bedarfsweise können Additive in Form von Mikrohohlkugeln aus Glas oder porösen Kugeln aus Keramik oder mikrofesten Kugeln aus Keramik oder kugelförmigen Partikeln aus geschmolzenem Aluminiumsilikat oder Kaolin zugefügt werden. In Abhängigkeit von der Ausrichtung des Gewebes beim Bewegen desselben durch das Gemisch aus Wasser, Harz, Pulpe und eventuell Additiven, nimmt das Gewebe bzw. nehmen dessen Fäden unterschiedlich viel von der Pulpe auf. Die Pulpe, die vorzugsweise hochfibriliert ist, bewirkt eine mechanische Verriegelung der Fäden des gitterförmigen Gewebes.

Die Herstellung eines derartigen Faserverbundmaterials ähnelt der von Papier, wobei das gitterartige Gewebe als später im fertigen Faserverbundmaterial verbleibenden Komponente bereits zu Beginn des Prozesses als fester Bestandteil eingesetzt wird. Das in den Fäden des Gewebes (vgl. z.B. Fig. 3) vorhandene Harz ist zum Zeitpunkt des Tauchens in das Pulpe-Bad unvernetzt und wird durch das in dem Pulpe-Bad enhaltene Lösungsmittel wieder angelöst und daher äußerst empfänglich für die hochfibrillierte Pulpe, so dass der Anhaftungseffekt sehr gut ist.

Nach Entfernung des Gewebes aus dem Pulpe-Bad kann ein leichtes Verpressen des so geschaffenen Verbundes und anschließend ein Trocknen vorzugsweise mit Hilfe eines Luftstromtrockners bei Temperaturen unter 120°C erfolgen, um auch in diesem Fall die Vernetzung des Harzes zu vermeiden. Nach dem Trocknen kann ein zweiter Pressvorgang stattfinden, bei dem wiederum die Temperatur auf niedrigem Niveau gehalten werden muss (maximal 30°C). Danach kann ein Gewebe bestehend aus denselben oder aus anderen Fasern aufgelegt werden, um anschließend wiederum mit Hilfe einer Bewegung durch das Pulpe-Bad eine Belegung mit den die Pulpe bildenden Fasern zu bewirken.

Falls gewünscht kann ein teflonbeschichtetes Gitterwerk als Hilfsmittel bei der Belegung mit den Fasern der Pulpe dienen, wobei das Gitterwerk nach dem Trocknungsvorgang wieder entfernt wird. Der Prozess der Herstellung eines derartigen Faserverbundmaterials kann wie die Papierherstellung auch als Fließprozess ausgeführt werden. In Analogie zu einer Formierpartie einer Papiermaschine wird das Gittergewebe durch das Pulpe-Bad bewegt, um eine Faseranhaftung zu erreichen. Eine Entfernung des Lösungsmittels des Pulpe-Bads aus dem im Entstehen begriffenen Faserverbundmaterial kann mithilfe von Vakuum-Saugkästen erfolgen. Anschließend kann der Lösungsmittelgehalt durch Pressen zwischen Walzen - analog zu einer Presspartie einer Papiermaschine - erfolgen. Schließlich kann im Wege eines Führens der Bahn des Faserverbundmaterials über dampfbeheizte Zylinder eine weitere Trocknung des Materials bewirkt werden, um das bahnförmige Material im unvernetzten Zustand des Harzes verklebungsfrei auf einer Rolle aufwickeln und lagern zu können. Auch dieses Material kann zur Herstellung von Sandwich-Konstruktionen in Kombination mit gleichem Bahnmaterial - in um 45° verdrehter Anordnung - dienen.

### Bezugszeichenliste

- 1: Faden
- 2: Einzelfilament
- 3: Einzelfilament
- 4: Innenzone
- 5: Außenzone
- 6: Zwischenraum
- 7: Zwickelbereich
- 8: Faserverbundmaterial
- 9: Masche
- 10: Weite
- 11: Weite
- 12a: Kontaktfläche
- 12b: Kontaktfläche
- 13a: Brücke
- 13b: Brücke
- 14a: Höhe
- 14b: Höhe
- 15a: Dicke
- 15b: Dicke
- 16: Schicht
- 17: Schicht
- 18: Faserverbundmaterial
- 19: Dicke
- 20: Dicke
- 21: Dicke
- 22: Pfeil
- 23: Dicke
- 24: Profil
- 25: Innendurchmesser
- 26: Wandstärke
- 27: Pfeil
- 28: Faserverbundmaterial
- 29: Linie
- 30: Linie
- 31: Profil
- 32: Schenkel
- 33: Kontaktfläche
- 34: Innere Mantelfläche

## Patentansprüche

1. Verfahren zur Herstellung eines Faserverbundmaterials (8, 18, 28), enthaltend Fasern und ein diese verbindendes Harz, mit den folgenden Verfahrensschritten:
a) Es werden Fäden (1) verwendet, die jeweils aus einem monofilen Verbund aus einer Mehrzahl von Einzelfilamenten (2, 3) bestehen, die von einem durch Einwirkung mindestens einer physikalischen Größe und/oder eines chemischen Stoffs vernetzbaren Harz zusammengehalten werden, wobei die Einzelfilamente (2, 3) eines Fadens (1) jeweils unidirektional zueinander angeordnet sind,
b) Aus den Fäden (1) wird ein Faserverbundmaterial (8, 18, 28) gebildet, indem benachbarte Fäden (1) an Kontaktflächen (12a, 12b) ihrer äußeren Mantelflächen über Brücken miteinander verbunden werden, wobei die Einzelfilamente (2, 3) der Fäden (1) relativ zueinander verschiebbar sind und alle Einzelfilamente (2, 3) vollständig in das Material des Harzes eingebettet sind und sich in den Fäden (1) keine Lufteinschlüsse befinden,
c) Das Harz wird nach der Bildung des Verbundes aus den Fäden (1) gemäß Merkmal b) durch Einwirkung mindestens einer physlkalischen Größe und/oder eines chemischen Stoffes vernetzt, wodurch das Faserverbundmaterial (8, 18, 28) seine Endfestigkeit erhält.
wobei das Faserverbundmaterial ein Gewirk, Gestrick oder ein Gewebe, vorzugsweise in Leinwandbindung ist, das Kett- und Schussfäden in Form von Fäden (1) anthält, die einen Verbund aus einer Mehrzahl von Einzelfilamenten (2, 3) und dem unvemetzten Harz bilden, wobei die Einzeifilamente (2, 3) sämtlicher der vorgenannten Fäden (1) unidirektional zueinander ausgerichtet sind und die Brücken (13a, 13b;) aus dem unvemetzten Harz bestehen.

2. Verfahren nach Anspruch 1, **dadurch gekennzeichnet, dass** die benachbarten und jeweils über Brücken (13a, 13b) aus Harz verbundenen Fäden (1) im Bereich ihrer Kontaktflächen (12a, 12b) miteinander verpresst werden.

3. Verfahren nach Anspruch 1 und 2, **dadurch gekennzeichnet, dass** das Verpressen der Fäden (1) in dem Verbund und das Vernetzen, insbesondere das Vernetzen durch Einwirkung von Temperatur, - zumindest teilweise - gleichzeitig erfolgen.

## Claims

1. Method for the production of a fibre composite material (8, 18, 28) including fibres and a resin connecting these fibres, comprising the following process steps:
a) threads (1) are used, each consisting of a monofilament composite comprising a plurality of individual filaments (2, 3) which are held together by a resin which can be cross-linked by action of at least one physical variable and/or a chemical substance, wherein the individual filaments (2, 3) of a thread (1) are each disposed unidirectionally with respect to one another,
b) a fibre composite material (8, 18, 28) is formed from the threads (1) whereby adjacent threads (1) are interconnected by means of bridges at contact surfaces (12a, 12b) of their outer lateral surfaces, wherein the individual filaments (2, 3) of the threads (1) are displaceable relative to one another and all the individual filaments (2, 3) are embedded completely in the material of the resin and no air inclusions are located in the threads (1),
c) after the formation of the composite from the threads (1) according to feature b), the resin is cross-linked by action of at least one physical variable and/or a chemical substance, whereby the fibre composite material (8, 18, 28) acquires its final strength,
wherein the fibre composite material is a crocheted fabric, a knitted fabric or a woven fabric, preferably in linen weave, which contains warp and weft threads in the form of threads (1), which form a composite of a plurality of individual filaments (2, 3) and the non-cross-linked resin, wherein the individual filaments (2, 3) of all the aforesaid threads (1) are aligned unidirectionally with respect to one another and the bridges (13a, 13b) consist of the non-cross-linked resin.

2. The method according to claim 1, **characterised in that** the adjacent threads (1) each connected by means of bridges (13a, 13b) of resin are pressed to one another in the region of their contact surfaces (12a, 12b).

3. The method according to claim 1 and 2, **characterised in that** the pressing of the threads (1) in the composite and the cross-linking, in particular the cross-linking by action of temperature, take place at least partially simultaneously.

## Revendications

1. Procédé de fabrication d'un matériau composite fibreux (8, 18, 28) contenant des fibres et une résine les reliant, par les étapes opératoires suivantes:
a) On utilise des fils (1) qui consistent respectivement en un composite monofil fait d'une pluralité de filaments distincts (2, 3) qui sont maintenus ensemble par une résine pouvant être réticulée par l'effet d'au moins un paramètre physique et/ou d'une substance chimique, les filaments distincts (2, 3) d'un fil (1) étant disposés respectivement dans un seul sens les uns par rapport aux autres ;
b) on forme à partir des fils (1) un matériau composite fibreux (8, 18, 28) en reliant entre eux des fils voisins (1) au niveau des surfaces de contact (12a, 12) de leurs surfaces d'enveloppe extérieure par des ponts, les filaments distincts (2, 3) des fils (1) étant déplaçables les uns par rapport aux autres et tous les filaments distincts (2, 3) étant noyés entièrement dans la matière de la résine et aucune inclusion d'air ne se trouvant dans les fils (1).
c) la résine, après la formation du composite à partir des fils (1) selon la caractéristique b), est réticulée par l'effet d'au moins un paramètre physique et/ou d'une substance chimique, ce qui donne sa solidité définitive au matériau composite fibreux (8, 18, 28);
le matériau composite fibreux étant une maille, un tricot ou un tissage, de préférence une liaison toilée qui contient des fils de chaîne et de trame sous forme de fils (1) qui forment un composite à partir d'une pluralité de filaments distincts (2, 3) et de la résine non réticulée, les filaments distincts (2, 3) de tous les fils précités (1) étant orientés dans un seul sens les uns par rapport aux autres et les ponts (13a, 13b) étant composés de la résine non réticulée;

2. Procédé selon la revendication 1, **caractérisé en ce que** les ponts voisins et les fils (1) reliés respectivement par des ponts en résine (13a, 13b) sont comprimés ensemble au niveau de leurs surfaces de contact (12a, 12b).

3. Procédé selon les revendications 1 et 2, **caractérisé en ce que** la compression des fils (1) dans le composite et la réticulation, en particulier la réticulation sous l'effet de la température ont lieu du moins partiellement en même temps.
